# EUROPEAN PATENT APPLICATION

(11) **EP 4 283 109 A1**
(43) Date of publication of application: **29.11.2023**
(21) Application number: 23175791.5
(22) Date of filing: 26.05.2023
(51) Int. Cl.: F02K 1/00, F02K 1/12, B64C 29/00

(54) **THRUST VECTORING EXHAUST NOZZLE FOR AIRCRAFT PROPULSION SYSTEM**

(30) Priority: 26.05.2022 US 202263346159 P
(71) Applicant: RTX Corporation, Farmington, CT 06032 (US)
(72) Inventor: HANRAHAN, Paul R., Sedona, 86351 (US); BOCHAR, Roxanne M., Manchester, 06042 (US)
(74) Representative: Dehns

(57) **Abstract**

An assembly for an aircraft propulsion system (20) includes a bladed rotor (24) and a thrust vectoring exhaust nozzle (100). The bladed rotor (24) is rotatable about an axis (28). The thrust vectoring exhaust nozzle (100) is configured to direct gas propelled by the bladed rotor (24) out of the aircraft propulsion system (20) along a first direction during a first mode and along a second direction during a second mode. The first direction is parallel with the axis (28) or angularly offset from the axis (28) by no more than five degrees. The second direction is angularly offset from the axis (28) by at least seventy-five degrees. The thrust vectoring exhaust nozzle (100) has a first exit area (109A) during the first mode and a second exit area (109B) during the second mode that is greater than the first exit area (109A).

## Description

### BACKGROUND OF THE DISCLOSURE

### 1. Technical Field

This disclosure relates generally to an aircraft and, more particularly, to an aircraft propulsion system for alternately generating power for multi-directional propulsion.

### 2. Background Information

Various types and configurations of propulsion systems are known in the art for an aircraft. While these known aircraft propulsion systems have various benefits, there is still room in the art for improvement.

### SUMMARY OF THE DISCLOSURE

According to an aspect of the present disclosure, an assembly is provided for an aircraft propulsion system. This assembly includes a bladed rotor and a thrust vectoring exhaust nozzle. The bladed rotor is rotatable about an axis. The thrust vectoring exhaust nozzle is configured to direct gas propelled by the bladed rotor out of the aircraft propulsion system along a first direction during a first mode and along a second direction during a second mode. The first direction is parallel with the axis or angularly offset from the axis by no more than five degrees. The second direction is angularly offset from the axis by at least seventy-five degrees. The thrust vectoring exhaust nozzle has a first exit area during the first mode and a second exit area during the second mode that is greater than the first exit area.

According to another aspect of the present disclosure, another assembly is provided for an aircraft propulsion system. This assembly includes a bladed rotor and a thrust vectoring exhaust nozzle. The thrust vectoring exhaust nozzle is configured to direct gas propelled by the bladed rotor out of the aircraft propulsion system substantially along a horizontal direction during a horizontal thrust mode and substantially along a vertical direction during a vertical lift mode. The thrust vectoring exhaust nozzle has a first exit area during the horizontal thrust mode and a second exit area during the vertical lift mode that is greater than the first exit area.

According to still another aspect of the present disclosure, another assembly is provided for an aircraft propulsion system. This assembly includes a duct, a first thrust vectoring exhaust nozzle and a second thrust vectoring exhaust nozzle. The first thrust vectoring exhaust nozzle is fluidly coupled with and downstream of the duct. The first thrust vectoring exhaust nozzle includes a first flap pivotable between a first flap first position and a first flap second position. The second thrust vectoring exhaust nozzle is fluidly coupled with and downstream of the duct. The second thrust vectoring exhaust nozzle includes a second flap pivotable between a second flap first position and a second flap second position.

The assembly may also include a gas turbine engine core. The gas turbine engine core may include a compressor section, a combustor section, a turbine section and a core exhaust nozzle configured to direct gas received from the turbine section out of the aircraft propulsion system independent of the first thrust vectoring exhaust nozzle and the second thrust vectoring exhaust nozzle.

The assembly may also include a gas turbine engine core and a second bladed rotor. The gas turbine engine core may include a compressor section, a combustor section, a turbine section and a rotating structure. The rotating structure may include a turbine rotor within the turbine section. The bladed rotor may be configured to be driven by the rotating structure. The second bladed rotor may also be configured to be driven by the rotating structure.

The second bladed rotor may be rotatable about a second axis that is angularly offset from the axis.

The second bladed rotor may be configured to generate propulsive power in the second direction.

The second exit area may be greater than one and one-quarter times the first exit area.

The second exit area may be greater than one and one-half times the first exit area.

The first direction may be parallel with the axis.

The second direction may be angularly offset from the axis between eight-five degrees and ninety-five degrees.

The thrust vectoring exhaust nozzle may include a flap configured to pivot at least seventy degrees between a first position and a second position. The flap may be in the first position during the first mode. The flap may be in the second position during the second mode.

The thrust vectoring exhaust nozzle may be configured to direct the gas along opposing sides of the flap during the first mode and/or the second mode.

The thrust vectoring exhaust nozzle may include a vane. The vane may include a fixed portion and the flap. The fixed portion may form a leading edge of the vane. The flap may form a trailing edge of the vane.

The thrust vectoring exhaust nozzle may be configured to direct the gas along a first side of the flap during the first mode. The thrust vectoring exhaust nozzle may be configured to direct the gas along a second side of the flap during the second mode.

The assembly may also include a duct. A leading edge of the flap may be disposed at a first side of the duct during the first mode. The leading edge of the flap may be disposed at a second side of the duct during the second mode.

The first exit area may be formed between the flap and the second side of the duct. The second exit area may be formed between the flap and the first side of the duct.

The bladed rotor may be configured as or otherwise include a fan rotor.

The assembly may also include a gas turbine engine core. The gas turbine engine core may include a compressor section, a combustor section, a turbine section and a core exhaust nozzle configured to direct gas received from the turbine section out of the aircraft propulsion system independent of the thrust vectoring exhaust nozzle.

The core exhaust nozzle may be configured as or otherwise include a fixed exhaust nozzle.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a partial, schematic illustration of an aircraft propulsion system.
FIGS. 2A and 2B are partial schematic illustrations of the aircraft propulsion system with a thrust vectoring exhaust nozzle.
FIGS. 3A and 3B are partial schematic illustrations of the aircraft propulsion system with another thrust vectoring exhaust nozzle.
FIGS. 4A and 4B are illustrations of nozzle flaps for the thrust vectoring exhaust nozzle with various configurations.
FIG. 5 is a partial schematic illustration of the aircraft propulsion system with multiple thrust vectoring exhaust nozzles.
FIG. 6 is a partial schematic illustration of the aircraft propulsion system configured without a geartrain.
FIG. 7 is a partial schematic illustration of a gas turbine engine core with multi-staged compressor rotors.
FIG. 8 is a partial schematic illustration of a rotating structure coupled to and driving multiple propulsor rotors for generating propulsive lift.

### DETAILED DESCRIPTION

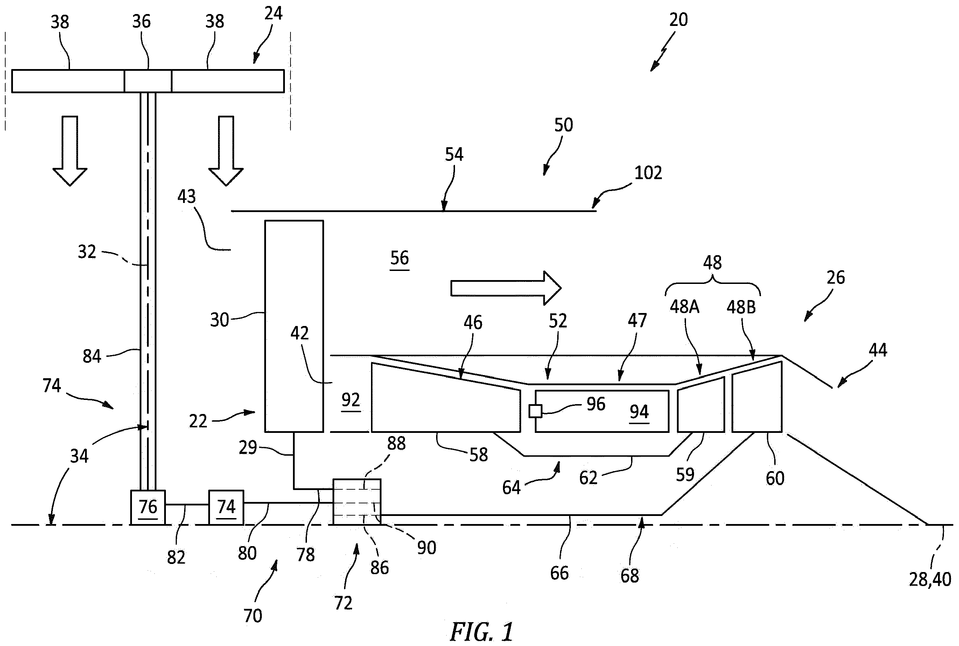

FIG. 1 schematically illustrates a propulsion system 20 for an aircraft. The aircraft may be an airplane, a helicopter, a drone (e.g., an unmanned aerial vehicle (UAV)), a spacecraft or any other manned or unmanned aerial vehicle. This aircraft may be configured as a vertical take-off and landing (VTOL) aircraft or a short take-off and vertical landing (STOVL) aircraft. The aircraft propulsion system 20 of FIG. 1, for example, is configured to generate power for first direction propulsion (e.g., propulsive thrust) during a first mode of operation and to generate power for second direction propulsion (e.g., propulsive lift) during a second mode of operation, where the first direction is different than (e.g., angularly offset from) the second direction. The first mode may be a horizontal (e.g., forward) flight mode where the first direction propulsion is substantially horizontal (e.g., within 5 degrees, 10 degrees, etc. of a horizontal axis) propulsive thrust. The second mode may be a vertical flight and/or hover mode where the second direction propulsion is substantially vertical (e.g., within 5 degrees, 10 degrees, etc. of a vertical axis) propulsive lift. The aircraft propulsion system 20, of course, may also be configured to generate both the first direction propulsion (e.g., horizontal thrust) and the second direction propulsion (e.g., vertical lift) during a third (e.g., transition) mode of operation. The aircraft propulsion system 20 of FIG. 1 includes at least one bladed first propulsor rotor 22, at least one bladed second propulsor rotor 24 and a gas turbine engine core 26 configured to rotatably drive the first propulsor rotor 22 and the second propulsor rotor 24.

The first propulsor rotor 22 may be configured as a ducted rotor such as a fan rotor. The first propulsor rotor 22 of FIG. 1 is rotatable about a first rotor axis 28. This first rotor axis 28 is an axial centerline of the first propulsor rotor 22 and may be horizontal when the aircraft is on ground. The first propulsor rotor 22 includes at least a first rotor disk 29 and a plurality of first rotor blades 30 (on visible in FIG. 1); e.g., fan blades. The first rotor blades 30 are distributed circumferentially around the first rotor disk 29 in an annular array. Each of the first rotor blades 30 is connected to and projects radially (relative to the first rotor axis 28) out from the first rotor disk 29.

The second propulsor rotor 24 may be configured as an open rotor such as a propeller rotor or a helicopter (e.g., main) rotor. Of course, in other embodiments, the second propulsor rotor 24 may alternatively be configured as a ducted rotor such as a fan rotor; e.g., see dashed line duct. The second propulsor rotor 24 of FIG. 1 is rotatable about a second rotor axis 32. This second rotor axis 32 is an axial centerline of the second propulsor rotor 24 and may be vertical when the aircraft is on the ground. The second rotor axis 32 is angularly offset from the first rotor axis 28 by an included angle 34; e.g., an acute angle or a right angle. This included angle 34 may be between sixty degrees (60°) and ninety degrees (90°); however, the present disclosure is not limited to such an exemplary relationship. The second propulsor rotor 24 includes at least a second rotor disk 36 and a plurality of second rotor blades 38; e.g., open rotor blades. The second rotor blades 38 are distributed circumferentially around the second rotor disk 36 in an annular array. Each of the second rotor blades 38 is connected to and projects radially (relative to the second rotor axis 32) out from the second rotor disk 36.

The engine core 26 extends axially along a core axis 40 between a forward, upstream airflow inlet 42 and an aft, downstream core exhaust nozzle 44; e.g., a fixed exhaust nozzle. The core axis 40 may be an axial centerline of the engine core 26 and may be horizontal when the aircraft is on the ground. This core axis 40 may be parallel (e.g., coaxial) with the first rotor axis 28 and, thus, angularly offset from the second rotor axis 32. The engine core 26 of FIG. 1 includes a compressor section 46, a combustor section 47 and a turbine section 48. The turbine section 48 of FIG. 1 includes a high pressure turbine (HPT) section 48A and a low pressure turbine (LPT) section 48B (also sometimes referred to as a power turbine section).

The engine sections 46-48B are arranged sequentially along the core axis 40 within an engine housing 50. This engine housing 50 includes an inner case 52 (e.g., a core case) and an outer case 54 (e.g., a fan case). The inner case 52 may house one or more of the engine sections 46-48B; e.g., the engine core 26. The outer case 54 may house the first propulsor rotor 22. The outer case 54 of FIG. 1 also axially overlaps and extends circumferentially about (e.g., completely around) the inner case 52 thereby at least partially forming a bypass flowpath 56 radially between the inner case 52 and the outer case 54.

Each of the engine sections 46, 48A and 48B includes a bladed rotor 58-60 within that respective engine section 46, 48A, 48B. Each of these bladed rotors 58-60 includes a plurality of rotor blades arranged circumferentially around and connected to one or more respective rotor disks. The rotor blades, for example, may be formed integral with or mechanically fastened, welded, brazed, adhered and/or otherwise attached to the respective rotor disk(s).

The compressor rotor 58 is connected to the HPT rotor 59 through a high speed shaft 62. At least (or only) these engine components 58, 59 and 62 collectively form a high speed rotating structure 64. This high speed rotating structure 64 is rotatable about the core axis 40. The LPT rotor 60 is connected to a low speed shaft 66. At least (or only) these engine components collectively form a low speed rotating structure 68. This low speed rotating structure 68 is rotatable about the core axis 40. The low speed rotating structure 68 and, more particularly, its low speed shaft 66 may project axially through a bore of the high speed rotating structure 64 and its high speed shaft 62.

The aircraft propulsion system 20 of FIG. 1 includes a powertrain 70 that couples the low speed rotating structure 68 to the first propulsor rotor 22 and that couples the low speed rotating structure 68 to the second propulsor rotor 24. The powertrain 70 of FIG. 1 includes a geartrain 72, a transmission 74 and a gearing 76; e.g., bevel gearing. The powertrain 70 of FIG. 1 also includes one or more shafts 78, 80, 82 and 84 and/or other torque transmission devices for coupling the geartrain 72 to the first propulsor rotor 22 and the second propulsor rotor 24.

The geartrain 72 may be configured as an epicyclic geartrain such as, but not limited to, a planetary geartrain and/or a star geartrain. The geartrain 72 of FIG. 1, for example, includes a first component 86 (e.g., an inner gear such as a sun gear), a second component 88 (e.g., an outer gear such as a ring gear) and a third component 90 (e.g., a carrier supporting one or more intermediate gears such as planet or star gears), where the components 86, 88 and 90 (or the gears attached thereto) are meshed or otherwise engaged with one another. The first component 86 is connected to the low speed rotating structure 68 and its low speed shaft 66. The second component 88 is connected to the first propulsor rotor 22 through the first propulsor shaft 78. The third component 90 is connected to an input of the transmission 74 through the geartrain output shaft 80.

An output of the transmission 74 is connected to an input of the gearing 76 through the transmission output shaft 82. This transmission 74 may be configured to selectively couple (e.g., transfer mechanical power between) the geartrain output shaft 80 and the transmission output shaft 82. During the first mode of operation, for example, the transmission 74 may be configured to decouple the geartrain output shaft 80 from the transmission output shaft 82, thereby decoupling the low speed rotating structure 68 from the second propulsor rotor 24. During the second mode of operation (and the third mode of operation), the transmission 74 may be configured to couple the geartrain output shaft 80 with the transmission output shaft 82, thereby coupling the low speed rotating structure 68 with the second propulsor rotor 24. The transmission 74 may be configured as a clutched transmission or a clutchless transmission.

An output of the gearing 76 is connected to the second propulsor rotor 24 through the second propulsor shaft 84. This gearing 76 provides a coupling between the transmission output shaft 82 rotating about the axis 28, 40 and the second propulsor shaft 84 rotating about the second rotor axis 32. The gearing 76 may also provide a speed change mechanism between the transmission output shaft 82 and the second propulsor shaft 84. The gearing 76, however, may alternatively provide a 1:1 rotational coupling between the transmission output shaft 82 and the second propulsor shaft 84 such that these shafts 82 and 84 rotate at a common (e.g., the same) speed. Furthermore, in some embodiments, the gearing 76 and the transmission output shaft 82 may be omitted where the functionality of the gearing 76 is integrated into the transmission 74. In still other embodiments, the transmission 74 may be omitted where decoupling of the second propulsor rotor 24 is not required.

During operation of the aircraft propulsion system 20, air enters the engine core 26 through the airflow inlet 42. This air is directed into a core flowpath 92 which extends sequentially through the compressor section 46, the combustor section 47, the HPT section 48A and the LPT section 48B to the core exhaust nozzle 44. The air within this core flowpath 92 may be referred to as core air.

The core air is compressed by the compressor rotor 58 and directed into a (e.g., annular) combustion chamber 94 of a (e.g., annular) combustor in the combustor section 47. Fuel is injected into the combustion chamber 94 through one or more fuel injectors 96 (one visible in FIG. 1) and mixed with the compressed core air to provide a fuel-air mixture. This fuel-air mixture is ignited and combustion products thereof flow through and sequentially cause the HPT rotor 59 and the LPT rotor 60 to rotate. The rotation of the HPT rotor 59 drives rotation of the high speed rotating structure 64 and its compressor rotor 58. The rotation of the LPT rotor 60 drives rotation of the low speed rotating structure 68. The rotation of the low speed rotating structure 68 drives rotation of the first propulsor rotor 22 through the geartrain 72 during a select mode or modes of operation; e.g., the first and the third modes of operation. The rotation of the low speed rotating structure 68 drives rotation of the second propulsor rotor 24 through the geartrain 72 during a select mode or modes of operation; e.g., the second and the third modes of operation. During the first mode of operation, the transmission 74 may decouple the low speed rotating structure 68 from the second propulsor rotor 24 such that the low speed rotating structure 68 does not drive rotation of the second propulsor rotor 24. The second propulsor rotor 24 may thereby be stationary (or windmill) during the first mode of operation.

During at least the first mode of operation, the rotation of the first propulsor rotor 22 propels bypass air (separate from the core air) through the aircraft propulsion system 20 and its bypass flowpath 56 to provide the first direction propulsion; e.g., the forward, horizontal thrust. During at least the second mode of operation, the rotation of the second propulsor rotor 24 propels additional air (separate from the core air and the bypass air) to provide the second direction propulsion; e.g., vertical lift. The aircraft may thereby takeoff, land and/or otherwise hover during the second mode of operation, and the aircraft may fly forward or otherwise move during the first mode of operation.

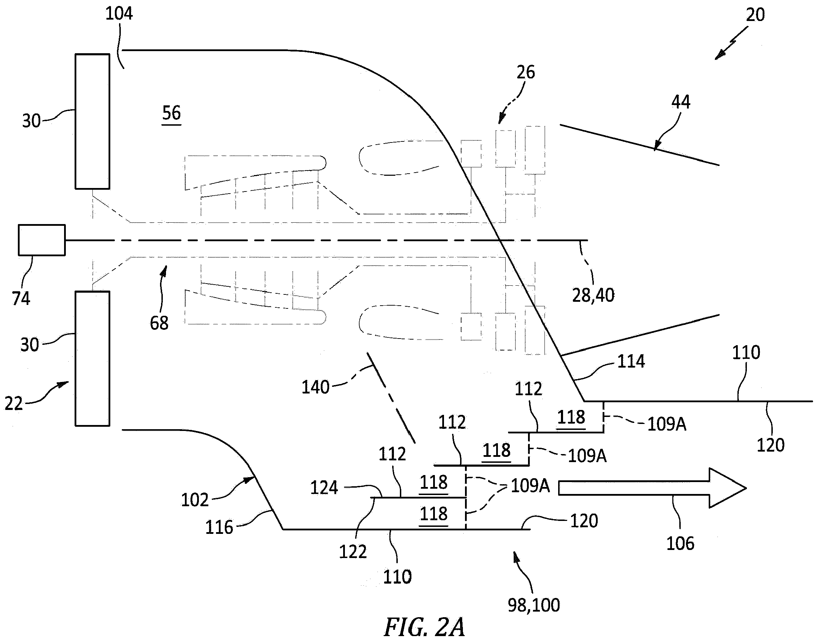

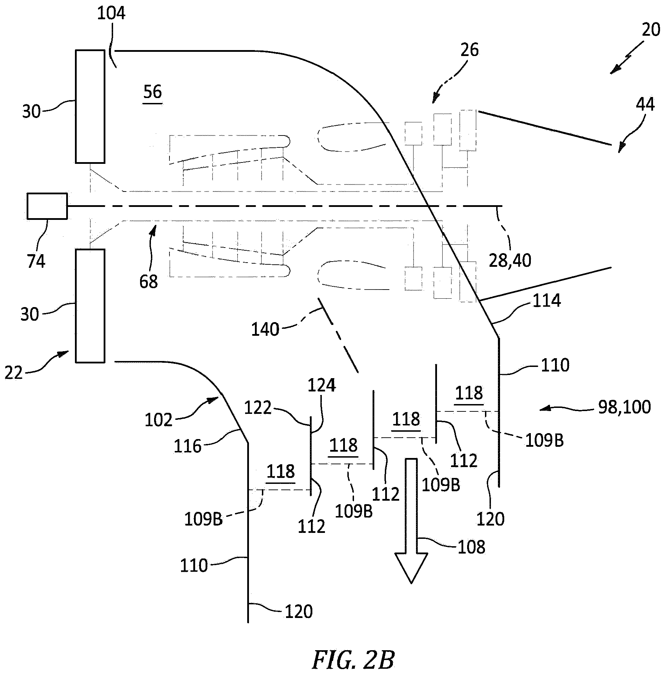

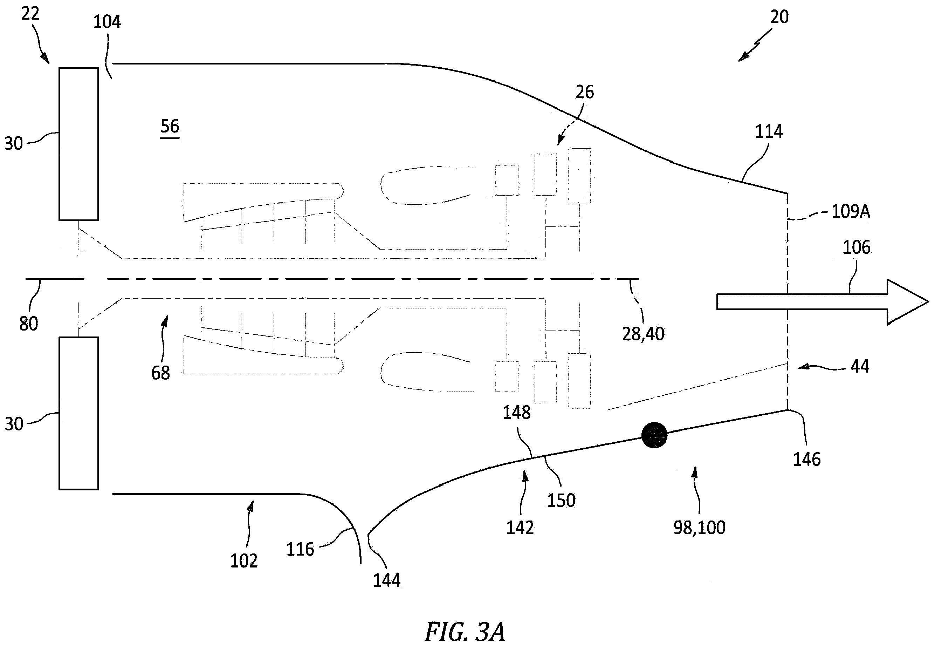

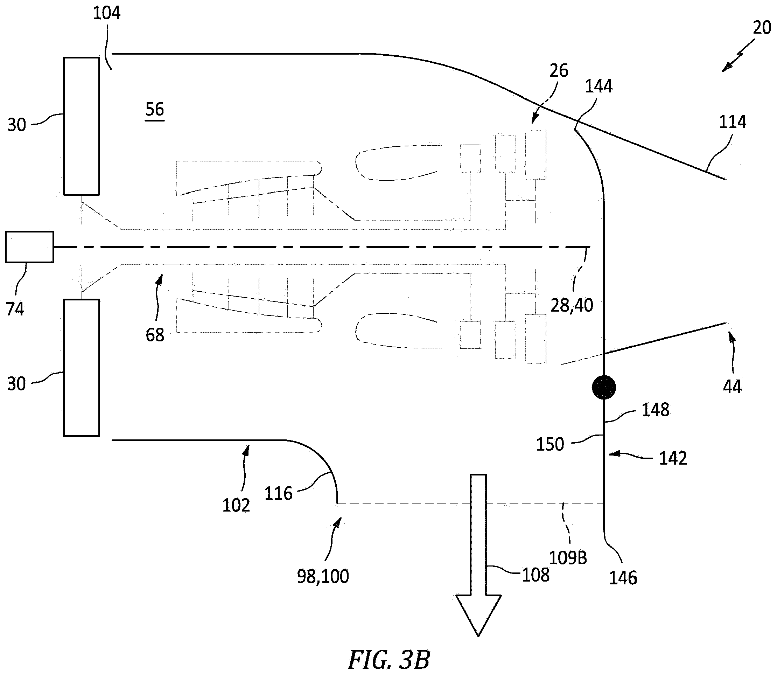

During each mode of operation, the low speed rotating structure 68 is coupled to the first propulsor rotor 22 through the geartrain 72. As described above, rotation of the first propulsor rotor 22 may generate horizontal thrust during the first mode of operation to propel the aircraft horizontally forward. However, generating such horizontal thrust (or significant amounts of horizontal thrust) may hinder and/or be less advantageous for certain aircraft takeoff, landing and/or hovering maneuvers during the second mode of operation. Furthermore, producing horizontal thrust with the first propulsor rotor 22 during the second mode of operation may also take away engine core power that could otherwise be provided to the second propulsor rotor 24 for vertical aircraft lift. Therefore, referring to FIGS. 2A and 2B and to FIGS. 3A and 3B, the aircraft propulsion system 20 is configured with a thrust control system 98. This thrust control system 98 is operable to selectively change a trajectory of the bypass air (gas) directed out of the aircraft propulsion system 20. The thrust control system 98 may also be operable to selectively distribute power between the first propulsor rotor 22 and the second propulsor rotor 24 (see FIG. 1).

The thrust control system 98 of FIGS. 2A and 2B, 3A and 3B includes a thrust vectoring exhaust nozzle 100. This thrust vectoring exhaust nozzle 100 is fluidly coupled with and downstream of a bypass duct 102 forming the bypass flowpath 56. Briefly, the bypass duct 102 and its bypass flowpath 56 extend longitudinally from an inlet 104 adjacent (or proximate) and downstream of the first propulsor rotor 22 to the thrust vectoring exhaust nozzle 100. The bypass duct 102 may be at least partially formed by the outer case 54 and the inner case 52 (or a structure covering the inner case 52) of FIG. 1.

The thrust vectoring exhaust nozzle 100 is configured to direct (e.g., focus and exhaust) the bypass air, which is propelled by the first propulsor rotor 22 and flows through the bypass flowpath 56, out of the aircraft propulsion system 20. Referring to FIG. 2A or 3A, the thrust vectoring exhaust nozzle 100 may direct the bypass air out of the aircraft propulsion system 20 in a first (e.g., horizontal) direction 106 during the first mode of operation. This first direction 106 may be parallel with, or angularly offset from the axis 28, 40 by no more than five degrees (5°). The thrust vectoring exhaust nozzle 100 may thereby facilitate the generation of the horizontal thrust during the first mode of operation. Referring to FIG. 2B or 3B, the thrust vectoring exhaust nozzle 100 may alternatively direct the bypass air out of the aircraft propulsion system 20 (e.g., downward) in a second (e.g., vertical) direction 108 during the second mode of operation. This second direction 108 is angularly offset from the first direction 106. The second direction 108, for example, may be perpendicular to, or angularly offset from the axis by at least seventy-five degrees (75°); e.g., between eighty-five degrees (85°) and ninety-five degrees (95°). The thrust vectoring exhaust nozzle 100 may thereby facilitate supplementing the vertical lift generated during the second mode of operation. Of course, the thrust vectoring exhaust nozzle 100 may direct the bypass air out of the aircraft propulsion system 20 in one or more intermediate directions between the first direction 106 and the second direction 108 during, for example, the third mode of operation.

During the first mode of operation of FIG. 2A or 3A, the thrust vectoring exhaust nozzle 100 has a first exit area; e.g., along dashed line(s) 109A. During the second mode of operation of FIG. 2B or 3B, the thrust vectoring exhaust nozzle 100 has a second exit area; e.g., along dashed line(s) 109B. The term exit area may describe a cross-sectional area of the thrust vectoring exhaust nozzle 100 at an outlet of the thrust vectoring exhaust nozzle 100 and/or a choke point of the thrust vectoring exhaust nozzle 100. This exit area may be measured in a single plane (or in multiple stagged planes) perpendicular to, for example, a direction of flow of the bypass air through the thrust vectoring exhaust nozzle 100. For example, the first exit area of FIG. 2A may be measured in vertical planes 109A between adjacent nozzle flaps 110, 112 (or other flow dividers), and the second exit area of FIG. 2B may be measured in horizontal planes 109B between the adjacent nozzle flaps 110, 112 (or other flow dividers). In another example, the first exit area of FIG. 3A may be measured in a vertical plane 109A between opposing sides of the thrust vectoring exhaust nozzle 100, and the second exit area of FIG. 3B may be measured in a horizontal plane 109B between the opposing sides of the thrust vectoring exhaust nozzle 100.

The second exit area is sized greater than the first exit area. The second exit area, for example, may be at least one and one-quarter (1 ¼) times the first exit area; e.g., between one and one-quarter (1 ¼) times and one and one-half (1 ½) times the first exit area, between one and one-half (1 ½) times and two (2) times the first exit area, or more. By increasing the exit area size during the second mode of operation, the bypass air directed out of the aircraft propulsion system 20 during the second mode of operation may be less focused (more diffuse) than the bypass air directed out of the aircraft propulsion system 20 during the first mode of operation. This decreases flow resistance through / pressure drop across the thrust vectoring exhaust nozzle 100 during the second mode of operation (compared to the first mode of operation), which may decrease power used by (work performed by) the first propulsor rotor 22 during the second mode of operation (compared to the first mode of operation). Additional power may thereby be transferred from the low speed rotating structure 68 to the second propulsor rotor 24 (see FIG. 1) for more efficient generation of the vertical aircraft lift during the second mode of operation. Therefore, in addition to selectively directing the bypass air to supplement the vertical lift during the second mode of operation, the thrust vectoring exhaust nozzle 100 may also facilitate increased power distribution to the second propulsor rotor 24 (see FIG. 1). By contrast, a typical prior art thrust vectoring nozzle decreases its exit area for generating vertical lift.

The thrust vectoring exhaust nozzle 100 of FIGS. 2A and 2B includes a plurality of exterior nozzle flaps 110 and one or more interior nozzle flaps 112. The exterior nozzle flaps 110 are arranged at and aligned with opposing (e.g., vertically upper and lower) sides 114 and 116 of the bypass duct 102. The interior nozzle flaps 112 are arranged between the exterior nozzle flaps 110 to form a plurality of paths 118 (e.g., sub-channels) through the thrust vectoring exhaust nozzle 100. Each of the nozzle flaps 110, 112 is movable between a first (e.g., horizontal thrust) position of FIG. 2A and a second (e.g., vertical lift) position of FIG. 2B. Each of the nozzle flaps 110, 112, for example, may pivot at least seventy degrees (70°) (e.g., between eighty degrees (80°) and one hundred degrees (100°)) from its first position of FIG. 2A to its second position of FIG. 2B. In the first position of FIG. 2A, each nozzle flap 110, 112 may be horizontal or close to (e.g., +/- 5° or 10° of) horizontal. In the second position of FIG. 2B, each nozzle flap 110, 112 may be vertical or close to (e.g., +/- 5° or 10° of) vertical.

During operation of the thrust vectoring exhaust nozzle 100, the bypass air flows to and along a common (e.g., the same) interior side 120 of each of the exterior nozzle flaps 110 in both the first and the second positions. By contrast, the bypass air flows about and along opposing sides 122 and 124 of the interior nozzle flaps 112 in both the first and the second positions.

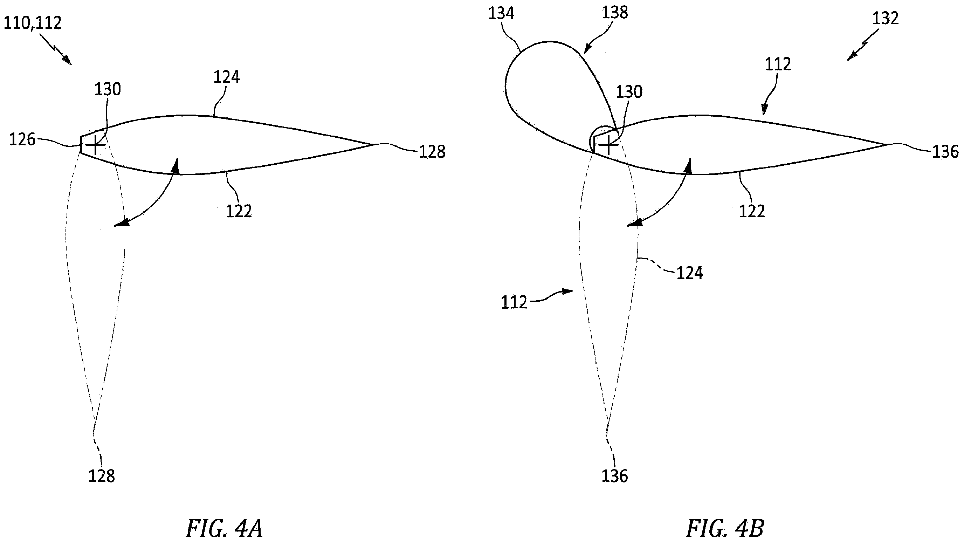

In some embodiments, referring to FIG. 4A, each of the nozzle flaps 110, 112 may extend longitudinally from a leading edge 126 of the respective nozzle flap 110, 112 to a trailing edge 128 of the respective nozzle flap 110, 112. An entirety of the nozzle flap 110, 112 of FIG. 4A is configured to pivot about a respective pivot axis 130 (e.g., at the leading edge 126) between its first and its second positions. In other embodiments, referring to FIG. 4B, one or more or all of the interior nozzle flaps 112 may each be configured as part of a vane 132 (or other flow divider). The vane 132 extends longitudinally from a leading edge 134 of the respective vane 132 to a trailing edge 136 of the respective vane 132. A fixed portion 138 of the vane 132 forms the vane leading edge 134. The respective nozzle flap 112 forms the vane trailing edge 136, where the nozzle flap 112 is configured to pivot about its respective pivot axis 130 between its first and its second positions. The vane 132 and its elements 112 and 138 may be configured (e.g., shaped, sized, etc.) to promote fluid attachment to a suction side of the respective vane 132. The vane elements 112 and 138 may be configured, for example, to maintain an aerodynamic, curved (e.g., substantially continuous) surface along the vane suction side, where the vane suction side is at the vane side 122 in the first position and at the vane side 124 in the second position.

In some embodiments, referring to FIGS. 2A and 2B, the bypass duct 102 may turn downward. A centerline 140 of the bypass duct 102 (partially shown in FIGS. 2A and 2B for ease of illustration) adjacent the thrust vectoring exhaust nozzle 100, for example, may be angularly offset from the axis 28, 40 by an acute angle. This angle may be between, for example, thirty degrees (30°) and fifty degrees (50°); e.g., forty-five degrees (45°). With such an arrangement, the nozzle vanes 110, 112 may pivot about the same amount from alignment with the bypass duct side 114, 116 and/or the centerline 140 to its first position or its second position.

The thrust vectoring exhaust nozzle 100 of FIGS. 3A and 3B includes a (e.g., single) nozzle flap 142. This nozzle flap 142 extends longitudinally from a leading edge 144 of the nozzle flap 142 to a trailing edge 146 of the nozzle flap 142. Referring to FIG. 3A, the flap leading edge 144 is disposed at (e.g., next to) and may be engaged with (e.g., sealed against, contact, etc.) the bypass duct (e.g., lower) side 116 when in its first position. The first exit area is thereby formed between and by the nozzle flap 142 and the bypass duct (e.g., upper) side 114. Substantially all of the bypass air therefore flows between the nozzle flap 142 and the bypass duct side 114 as the air exits the thrust vectoring exhaust nozzle 100. Thus, the bypass air flows along a first side 148 of the nozzle flap 142 while the nozzle flap 142 is in its first position. However, referring to FIG. 3B, the flap leading edge 144 is disposed at and may be engaged with the bypass duct (e.g., upper) side 114 when in its second position. The second exit area is thereby formed between and by the nozzle flap 142 and the bypass duct (e.g., lower) side 116. Substantially all of the bypass air therefore flows between the nozzle flap 142 and the bypass duct side 116 as the air exits the thrust vectoring exhaust nozzle 100. Thus, the bypass air flows along a second side 150 of the nozzle flap 142 while the nozzle flap 142 is in its second position, which second side 150 is opposite the first side 148.

In some embodiments, referring to FIGS. 2A and 2B, 3A and 3B, the core exhaust nozzle 44 is discrete from the thrust vectoring exhaust nozzle 100. More particularly, the core exhaust nozzle 44 directs the combustion products out of the aircraft propulsion system 20 independent of the thrust vectoring exhaust nozzle 100. Similarly, the thrust vectoring exhaust nozzle 100 directs the bypass air out of the aircraft propulsion system 20 independent of the core exhaust nozzle 44. With such an arrangement, the thrust vectoring exhaust nozzle 100 does not redirect the relatively hot combustion products out of the aircraft propulsion system 20 towards the ground during aircraft takeoff, landing and/or hovering maneuvers.

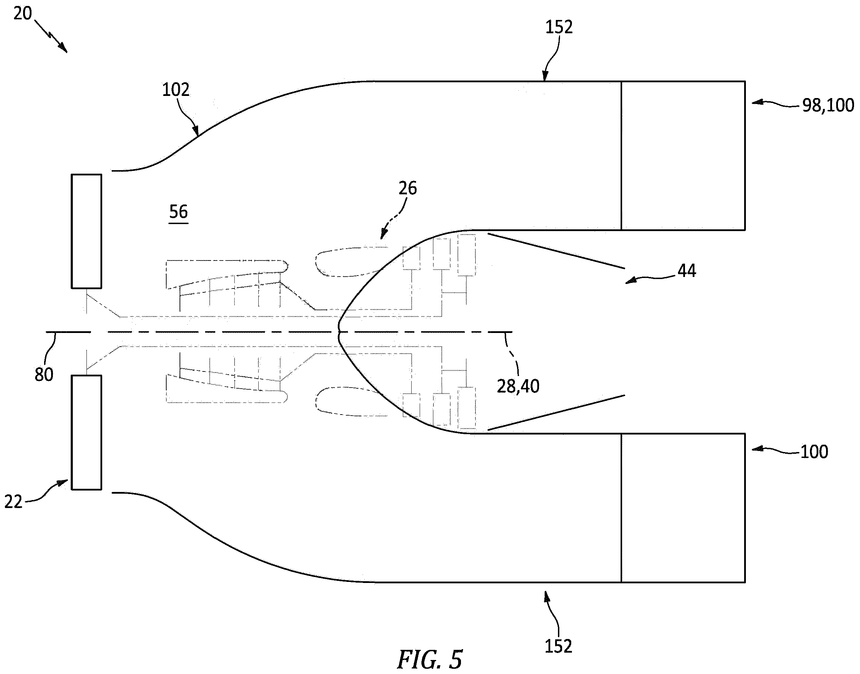

In some embodiments, the aircraft propulsion system 20 may include a single one of the thrust vectoring exhaust nozzle 100. In other embodiments, referring to FIG. 5, the bypass duct 102 may split into multiple legs 152. Each of the bypass duct legs 152 may be configured with its own thrust vectoring exhaust nozzle 100.

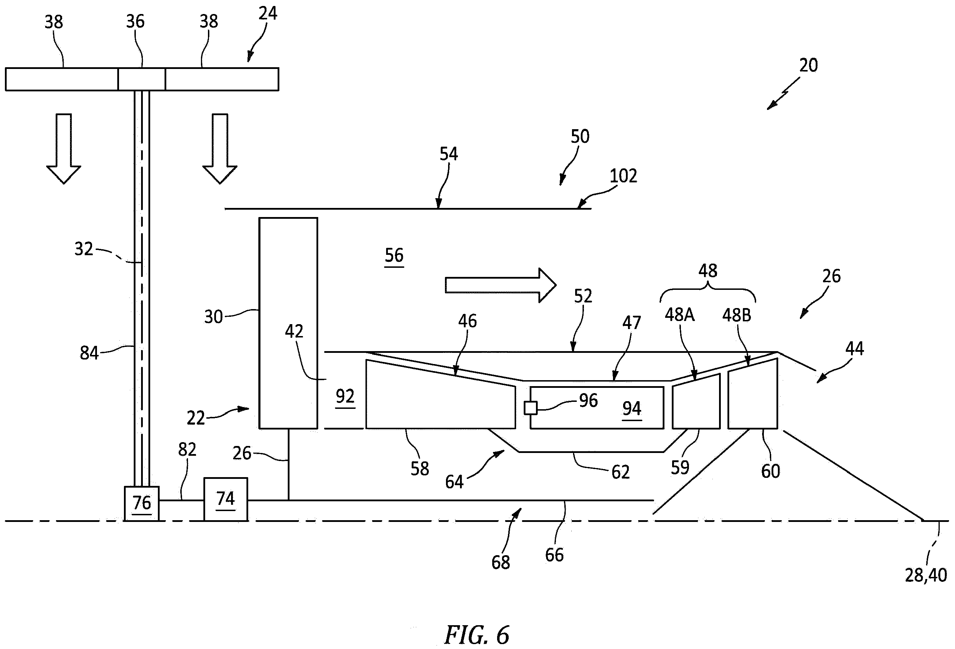

In some embodiments, the low speed rotating structure 68 is coupled to the first propulsor rotor 22 and/or the second propulsor rotor 24 through the geartrain 72. In other embodiments, referring to FIG. 6, the low speed rotating structure 68 may be coupled to the first propulsor rotor 22 and/or the second propulsor rotor 24 without a geartrain. The first propulsor rotor 22 of FIG. 6, for example, is coupled to the low speed shaft 66 through a direct connection such that the first propulsor rotor 22 rotates at a common (e.g., the same) speed with the low speed rotating structure 68.

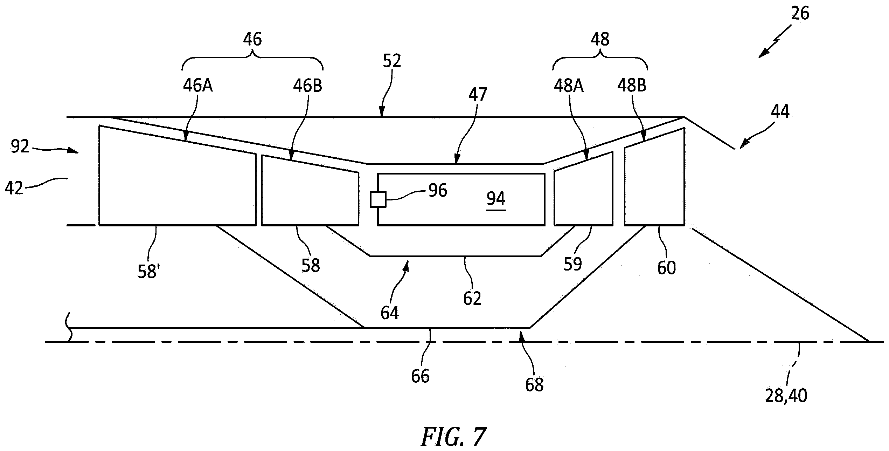

In some embodiments, referring to FIGS. 1 and 6, the low speed rotating structure 68 may be configured without a compressor rotor. In other embodiments, referring to FIG. 7, the low speed rotating structure 68 may include a low pressure compressor (LPC) rotor 58' arranged within a low pressure compressor (LPC) section 46A of the compressor section 46. In such embodiments, the compressor rotor 58 may be a high pressure compressor (HPC) rotor within a high pressure compressor (HPC) section 46B of the compressor section 46.

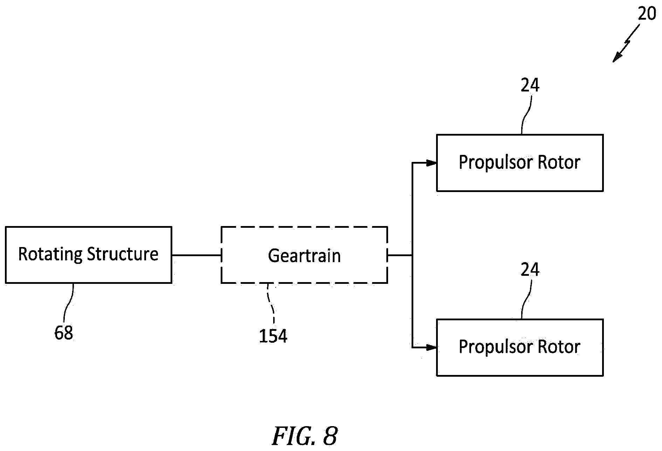

The engine core 26 may have various configurations other than those described above. The engine core 26, for example, may be configured with a single spool, with two spools (e.g., see FIG. 1), or with more than two spools. The engine core 26 may be configured with one or more axial flow compressor sections, one or more radial flow compressor sections, one or more axial flow turbine sections and/or one or more radial flow turbine sections. The engine core 26 may be configured with any type or configuration of annular, tubular (e.g., CAN), axial flow and/or reverser flow combustor. The present disclosure therefore is not limited to any particular types or configurations of gas turbine engine cores. Furthermore, it is contemplated the engine core 26 of the present disclosure may drive more than the two propulsors 22 and 24. The aircraft propulsion system 20, for example, may include two or more of the first propulsor rotors 22 and/or two or more of the second propulsor rotors 24. For example, the aircraft propulsion system 20 of FIG. 8 includes multiple second propulsor rotors 24 rotatably driven by the low speed rotating structure 68. These second propulsor rotors 24 may rotate about a common axis. Alternatively, each second propulsor rotor 24 may rotate about a discrete axis where, for example, the second propulsor rotors 24 are laterally spaced from one another and coupled to the low speed rotating structure 68 through a power splitting geartrain 154.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. An assembly for an aircraft propulsion system (20), comprising:
a bladed rotor (24) rotatable about an axis (28); and
a thrust vectoring exhaust nozzle (100) configured to direct gas propelled by the bladed rotor (24) out of the aircraft propulsion system (20) along a first direction (106) during a first mode and along a second direction (108) during a second mode, the first direction (106) parallel with the axis (28) or angularly offset from the axis (28) by no more than five degrees, and the second direction (108) angularly offset from the axis (28) by at least seventy-five degrees,
the thrust vectoring exhaust nozzle (100) having a first exit area (109A) during the first mode and a second exit area (109B) during the second mode that is greater than the first exit area (109A).

2. The assembly of claim 1, further comprising:
a gas turbine engine core (26) comprising a compressor section (46), a combustor section (47), a turbine section (48) and a rotating structure (68), the rotating structure (68) comprising a turbine rotor (60) within the turbine section (48);
the bladed rotor (24) configured to be driven by the rotating structure (68); and
a second bladed rotor (22) configured to be driven by the rotating structure (68).

3. The assembly of claim 2, wherein the second bladed rotor (24) is rotatable about a second axis (32) that is angularly offset from the axis (28), and/or is configured to generate propulsive power in the second direction (108).

4. The assembly of claim 1, 2 or 3, wherein the second exit area (109B) is greater than one and one-quarter times the first exit area (109A), or greater than one and one-half times the first exit area (109A).

5. The assembly of any preceding claim, wherein the first direction (106) is parallel with the axis (28), and/or the second direction (108) is angularly offset from the axis (28) between eight-five degrees and ninety-five degrees.

6. The assembly of any preceding claim, wherein:
the thrust vectoring exhaust nozzle (100) comprises a flap (110, 112; 142) configured to pivot at least seventy degrees between a first position and a second position;
the flap (110, 112) is in the first position during the first mode; and
the flap (110, 112) is in the second position during the second mode.

7. The assembly of claim 6, wherein the thrust vectoring exhaust nozzle (100) is configured to direct the gas along opposing sides (122, 124) of the flap (112) during at least one of the first mode or the second mode.

8. The assembly of claim 6 or 7, wherein:
the thrust vectoring exhaust nozzle (100) comprises a vane (132);
the vane includes a fixed portion (138) and the flap (112);
the fixed portion (138) forms a leading edge (134) of the vane (132); and
the flap (112) forms a trailing edge (136) of the vane (132).

9. The assembly of claim 6, wherein the thrust vectoring exhaust nozzle (100) is configured to direct the gas along a first side (148) of the flap (142) during the first mode, and the thrust vectoring exhaust nozzle (100) is configured to direct the gas along a second side of the flap (142) during the second mode.

10. The assembly of claim 6 or 9, further comprising:
a duct (102);
a leading edge (144) of the flap (142) disposed at a first side (116) of the duct during the first mode; and
the leading edge (144) of the flap (142) disposed at a second side (114) of the duct during the second mode.

11. The assembly of claim 10, wherein the first exit area (109A) is formed between the flap (142) and the second side (114) of the duct (102), and the second exit area (109B) is formed between the flap (142) and the first side (116) of the duct (102.

12. The assembly of any preceding claim, further comprising a/the gas turbine engine core (26) comprising a/the compressor section (46), a/the combustor section (47), a/the turbine section (48) and a core exhaust nozzle (44) configured to direct gas received from the turbine section (48) out of the aircraft propulsion system (20) independent of the thrust vectoring exhaust nozzle (100), optionally wherein the core exhaust nozzle (44) comprises a fixed exhaust nozzle.

13. The assembly of any preceding claim, wherein the first direction is a horizontal direction, the first mode is a horizontal thrust mode, the second direction is a vertical direction and the second mode is a vertical lift mode, and/or wherein the bladed rotor (22) comprises a fan rotor .

14. The assembly of claim 1, comprising:
a duct (102), wherein the thrust vectoring exhaust nozzle (100) is a first thrust vectoring exhaust nozzle (100) fluidly coupled with and downstream of the duct (102), the first thrust vectoring exhaust nozzle (100) comprising a first flap (100, 112; 142) pivotable between a first flap first position and a first flap second position; and
a second thrust vectoring exhaust nozzle (100) fluidly coupled with and downstream of the duct (102), the second thrust vectoring exhaust nozzle (100) comprising a second flap (110, 112; 142) pivotable between a second flap first position and a second flap second position.

15. The assembly of claim 14, further comprising a gas turbine engine core (26) comprising a compressor section (46), a combustor section (47), a turbine section (48) and a core exhaust nozzle (44) configured to direct gas received from the turbine section (48) out of the aircraft propulsion system (20) independent of the first thrust vectoring exhaust nozzle (100) and the second thrust vectoring exhaust nozzle (100).
